# EUROPÄISCHE PATENTANMELDUNG

(11) **EP 2 781 808 A1**
(43) Veröffentlichungstag der Anmeldung: **24.09.2014**
(21) Anmeldenummer: 14152471.0
(22) Anmeldetag: 24.01.2014
(51) Int. Cl.: F16J 15/16, F16J 15/32, F16J 15/56

(54) **Dichtungseinrichtung**

(30) Priorität: 21.03.2013 DE 202013002731 U
(71) Anmelder: Fietz Automotive GmbH, 51399 Burscheid (DE)
(72) Erfinder: Die Erfindernennung liegt noch nicht vor
(74) Vertreter: Albrecht, Ralf

(57) **Zusammenfassung**

Die Erfindung betrifft eine Dichtungseinrichtung (1) mit einem Außenteil (2), das eine Bohrung mit zylindrischer Innenwandung (4) aufweist, und einem in der Bohrung koaxial sitzenden Innenteil (3) mit einer zylindrischen Außenwandung (5), wobei Innenwandung (4) und Außenwandung (5) einen Ringspalt (6) ausbilden und wobei in die Außenwandung (5) eine zur Innenwandung (4) des Außenteils (2) hin offene Ringnut (7) eingeformt ist, in die in Richtung der Koaxialachse nebeneinander ein Dichtring (8) aus elastomerem Material und ein endloser Stützring (10) eingesetzt sind, welcher einen kreisrunden Außenumfang hat, dadurch gekennzeichnet, dass der kreisrunde Außenumfang des Stützrings (10) in zumindest einem Abschnitt durch eine in Richtung der Koaxialachse durchgehende Ausnehmung (13, 14, 15) unterbrochen ist. Die Erfindung bezieht sich ferner auf den Stützring (10) selbst.

## Beschreibung

Die Erfindung betrifft eine Dichtungseinrichtung mit einem Außenteil, das eine Bohrung mit zylindrischer Innenwandung aufweist, und einem in der Bohrung koaxial sitzenden Innenteil mit einer zylindrischen Außenwandung, wobei Innenwandung und Außenwandung einen Ringspalt ausbilden und wobei in eine der beiden Wandungen eine Ringnut eingeformt ist, in die in Richtung der Koaxialachse nebeneinander ein Dichtring aus elastomerem Material und ein endloser Stützring eingesetzt sind, welcher einen kreisrunden Umfang hat. Die Erfindung bezieht sich ferner auf den Stützring selbst.

Dichtungseinrichtungen der vorbeschriebenen Art finden in ganz unterschiedlichen Vorrichtungen, Geräten oder Maschinen Anwendung, beispielsweise bei Gehäuse- oder Rohranschlüssen, Stutzen von Tanks, Ventilen oder Hydraulik- oder Pneumatikzylindern. Gemeinsam ist ihnen, dass sich durch eine Bohrung in einem Außenteil - dies kann beispielsweise ein Gehäuseteil oder ein Rohr sein - ein koaxial darin sitzendes, meist stangenförmiges Innenteil erstreckt. Dieses Innenteil kann - ebenso wie das Außenteil - statisch angeordnet sein, beispielsweise bei Rohranschlüssen oder Verschlüssen. Es kann jedoch auch ein Maschinen- oder Geräteteil sein, das im Betrieb - meist langsame - rotierende und/oder Axialbewegungen ausführt. Eine Kombination dieser beiden Bewegungen findet zum Beispiel bei einer Ventilspindel statt, während bei einem Hydraulik- oder Pneumatikkolben lediglich eine Axialbewegung erfolgt.

Zur Abdichtung des Ringspalts zwischen Außenteil und Innenteil werden Dichtungsringe aus elastomerem Material verwendet, die in eine Ringnut entweder in der Außenwandung des Innenteils oder in der Innenwandung des Außenteils eingesetzt sind. Der Dichtring ragt dann aus der Ringnut soweit heraus, dass er an der gegenüberliegenden Wandung über deren gesamten Umfang anliegt. Zwischen Dichtring und Wandung entsteht so eine Dichtfläche. Als Dichtring sind insbesondere O-Ringe wegen ihrer Preiswürdigkeit beliebt.

In vielen Fällen werden solche Dichtungseinrichtungen dort eingesetzt, wo auf einer Seite ein höherer Druck herrscht als auf der anderen Seite. Wenn die Druckdifferenz zwischen der druckzugewandten und der druckabgewandten Seite des Dichtrings hoch ist, werden entsprechend hohe Anforderungen an die Stabilität des Dichtrings gestellt, damit er nicht aus der Ringnut, in die er eingelegt ist, in den Ringspalt zwischen Innenteil und Außenteil hineingedrückt wird. Diese Anforderung verträgt sich häufig nicht mit der Forderung nach optimaler Abdichtung.

Um auch bei Hochdruckanwendungen einfache und deshalb kostengünstige Dichtringe aus elastomerem Material, beispielsweise O-Ringe, verwenden zu können, kombiniert man einen solchen Dichtring mit einem Stützring. Der Stützring wird auf der druckabgewandten Seite zwischen Dichtring und dortiger Nutwandung eingesetzt. Er ragt aus der Ringnut heraus und bis auf ein Toleranzmaß an die der Ringnut gegenüberliegenden Wandung heran und deckt deshalb den druckabgewandten Teil des Ringspalts praktisch vollständig ab. Solche Stützringe haben in der Regel einen rechteckigen Querschnitt mit einem kreisrunden, insbesondere zylindrischen Umfang. Für den Stützring wird gerne PTFE verwandt, weil das Material gegenüber chemischen Einflüssen weitgehend unempfindlich ist und zudem hohe Temperaturen im Bereich zwischen 200 und 300 °C aushält. Er ist von solcher Stabilität, dass er den Dichtring daran hindert, in diesen Teil des Ringspalts einzudringen, auch wenn er mit hohem Druck auf der druckzugewandten Seite beaufschlagt wird.

Solche Stützringe haben normalerweise keine Dichtfunktion, d.h. die gesamte Abdichtung übernimmt der Dichtring. Überschreitet der Druck ein bestimmtes Maß, wirken Dichtring und Stützring wie ein Überdruckventil, d.h. das druckführende Medium hebt den Dichtring von der gegenüberliegenden Dichtfläche ab und entweicht über den Toleranzspalt am Stützring. Unter besonderen Umständen, insbesondere wenn nur eine geringe oder gar kein Toleranzspalt zwischen Stützring und Dichtfläche vorhanden ist und der Druck auf der druckzugewandten Seite besonders hoch ist, versagt zwar der Dichtring. Der Stützring wirkt jedoch wie eine zweite Stufe der Dichtungseinrichtung und verhindert auch bei weiterer Erhöhung des Drucks ein Entweichen des druckführenden Mediums. Dies hat im Einzelfall schon zu einem Platzen der die Dichtungseinrichtung aufweisenden Vorrichtung geführt. Es entstanden hohe Sachschäden, und es war nur ein glücklicher Zufall, dass bisher keine Personen verletzt wurden.

Der Erfindung liegt die Aufgabe zugrunde, eine Dichtungseinrichtung der eingangs genannten Art derart auszubilden, dass eine Überdruckventilfunktion zuverlässig gegeben ist.

Diese Aufgabe wird bei einer Ausführungsform mit Ringnut im Innenteil erfindungsgemäß dadurch gelöst, dass der kreisrunde Außenumfang des Stützrings in zumindest einem Abschnitt durch eine in Richtung der Koaxialachse durchgehende Ausnehmung unterbrochen ist, bei einer Ausführungsform mit Ringnut im Außenteil dadurch, dass der kreisrunde Innenumfang des Stützrings in zumindest einem Abschnitt durch eine in Richtung der Koaxialachse durchgehende Ausnehmung unterbrochen ist. Grundgedanke der Erfindung ist es, am ansonsten kreisrunden Umfang bereichsweise zumindest eine Ausnehmung vorzusehen, die einen Abfluss des druckführenden Mediums bei Funktionsunfähigkeit des Dichtrings ermöglicht und so die Entstehung eines unzulässigen Überdrucks in der die Dichtungseinrichtung enthaltenen Vorrichtung und damit deren Zerstörung vermeidet. Es wird folglich ein erheblicher Sicherheitsgewinn erzielt, ohne dass hierdurch die Stützwirkung des Stützrings beeinträchtigt wird.

In Ausbildung der Erfindung ist vorgeschlagen, dass nicht nur eine, sondern mehrere solcher Ausnehmungen vorgesehen sind, die vorzugsweise in gleichen Winkelabständen, also gleichmäßig über den Umfang des Stützrings verteilt angeordnet sind.

Grundsätzlich kann die jeweilige Ausnehmung beliebige Formgebungen haben. Eine vorteilhafte Formgebung ist die eines Kreissegments.

Die Erstreckung der jeweiligen Ausnehmung sollte einerseits so groß sein, dass der Stützring, wenn er von dem druckführenden Medium beaufschlagt wird, für einen schnellen Druckabbau sorgt. Andererseits darf die Stabilität des Stützrings, insbesondere seine Abstützfunktion gegenüber das Eindringen des Dichtrings in den Ringspalt nicht beeinträchtigt sein. Für die erstgenannte Funktion hat es sich als ausreichend erwiesen, wenn die maximale Erstreckung in Radialrichtung, d.h. in Richtung zum Mittelpunkt des Stützrings, mindestens 0,1 mm beträgt. Die Maximalerstreckung sollte 0,2 mm nicht übersteigen, wobei einer guter Kompromiss 0,15 mm ist.

Als Material für den Stützring kommen insbesondere Fluorkunststoffe in Frage, beispielsweise PTFE. In Abhängigkeit von den Betriebsbedingungen können jedoch auch andere, geeignete Kunststoffe verwendet werden.

Der Stützring hat zweckmäßigerweise einen rechteckigen Querschnitt, und zwar insbesondere einen solchen, dessen radiale Erstreckung größer ist als dessen axiale.

Der Dichtring kann als O-Ring ausgebildet sein. Auch für ihn ist die Verwendung von Fluorkunststoffen vorteilhaft.

Stützring und Dichtring müssen nicht miteinander verbunden sein. Dies schließt jedoch nicht aus, dass sie formschlüssig aneinander gekoppelt sind.

Gegenstand der Erfindung ist ferner ein Stützring für eine Dichtungseinrichtung der vorbeschriebenen Art, wobei zumindest der Außenumfang oder zumindest der Innenumfang des Stützrings in zumindest einem Abschnitt durch eine quer zur Ebene des Stützrings durchgehende Ausnehmung unterbrochen ist.

In der Zeichnung ist die Erfindung anhand eines Ausführungsbeispiels näher veranschaulicht. Es zeigen:
- Figur 1: eine Dichtungseinrichtung im Axialschnitt ohne Stützring;
- Figur 2: die Dichtungseinrichtung gemäß Figur 1 mit Stützring und
- Figur 3: den Stützring gemäß Figur 2 in der Draufsicht.

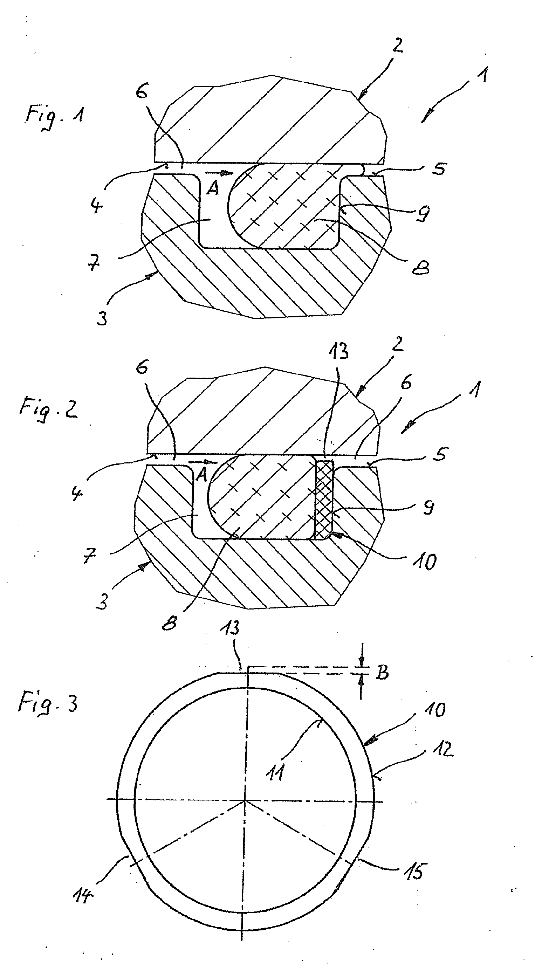

Die in den Figuren 1 und 2 dargestellte Dichtungseinrichtung 1 hat ein Außenteil 2 und ein Innenteil 3. Beide sind hier nur ausschnittsweise dargestellt. Das Außenteil 2 kann beispielsweise das Gehäuse eines Ventils sein, das im Bereich der Dichtungseinrichtung 1 eine Bohrung mit einer zylindrischen Innenwandung 4 aufweist. In die Bohrung des Außenteils 2 ist das Innenteil 3 eingesetzt. Es kann beispielsweise eine Ventilstange bzw. Ventilspindel sein. Das Innenteil 3 hat eine zylindrische Außenwandung 5, die koaxial zu der Innenwandung 4 verläuft. Innenwandung 4 und Außenwandung 5 schließen einen Ringspalt 6 ein.

In das Innenteil 3 ist eine im Querschnitt rechteckige Ringnut 7 eingeformt, die sich über den gesamten Umfang der Außenwandung 5 des Innenteils 3 erstreckt. In die Ringnut 7 eingesetzt ist ein als O-Ring ausgebildeter Dichtring 8. Die Ringnut 7 hat eine solche Tiefe, dass der Dichtring 8 nicht nur am Boden der Ringnut 7 anliegt, sondern auch an der Innenwandung 4 des Außenteils 2. Der Abstand zwischen dem Boden der Ringnut 7 und Innenwandung 4 ist so bemessen, dass der Dichtring 8 dabei in eine ovale Form verformt wird und auf diese Weise flächig an der Innenwandung 4 anliegt.

Figur 1 lässt erkennen, was geschieht, wenn der Dichtring 8 in Richtung des Pfeils A über den Ringspalt 6 mit hohem Druck beaufschlagt wird. Der Dichtring 8 wird gegen die rechte Seitenwandung der Ringnut 7 gepresst, im Bereich des Ringspalts 6 wird der Dichtring 8 in diesen hineingepresst. Dies ist unerwünscht, weil der Dichtring 8 dabei beschädigt wird und auch nicht mehr als Überdruckventil wirksam ist.

Um ein Eindringen von Material des Dichtrings 8 in den Ringspalt 6 zu vermeiden, ist - wie sich aus Figur 2 ersehen lässt - zwischen Dichtring 8 und rechter Seitenwandung 9 der Ringnut 7 eine Stützring 10 eingesetzt. Bei Druckbeaufschlagung des Dichtrings 8 in Richtung des Pfeils A legt sich der Dichtring 8 an der ihm zugewandten Seite des Stützrings 10 an. Da der Stützring 10 bis nahe an die Innenwandung 4 des Außenteils 2 heranreicht, wird der Dichtring 8 daran gehindert, sich so zu verformen, wie in Figur 1 dargestellt.

In Figur 3 ist der Stützring 10 - um 90° verdreht - in der Draufsicht dargestellt. Der Stützring 10 hat innenseitig einen ununterbrochen kreisrunden Innenumfang 11, dessen Radius mit dem Radius der Ringnut 7 im Wesentlichen übereinstimmt. Der Stützring 7 ist endlos, d.h. er muss, um in die Ringnut 7 eingelegt werden zu können, entsprechend aufgeweitet werden (sogenannter "snap-back-Ring"). Der Außenumfang 12 hat ebenfalls eine zylindrische Grundform, wobei der Radius R1 bis auf ein Toleranzmaß dem Radius der Innenwandung 4 des Außenteils 2 entspricht. Über den Außenumfang 12 gleichmäßig verteilt sind drei Abflachungen, die kreissegmentförmige Ausnehmungen 13, 14, 15 ausbilden und den ansonsten kreisförmigen Umfang unterbrechen. Deren Maximalerstreckung B in Radialrichtung beträgt gegenüber der kreisrunden Grundform 0,15 mm. Dies ist bis auf ein Toleranzmaß auch der Maximalabstand zwischen dem Außenumfang 12 des Stützrings 10 im Bereich der Ausnehmungen 13, 14, 15 zu der Innenwandung 4 des Außenteils 2.

Sollte sich auf der druckzugewandten Seite des Dichtrings 8 ein unzulässig hoher Druck aufbauen, der ein Abheben des Dichtrings 8 von der Innenwandung 4 des Außenteils 2 zur Folge hat, kann das druckführende Medium über die Ausnehmungen 13, 14, 15 in den nachfolgenden Ringspalt 6 abfließen, so dass ein weiterer Druckaufbau verhindert wird. Gleichzeitig sind die Ausnehmungen 13, 14, 15 so bemessen, dass der Dichtring 8 trotz des Vorhandenseins der Ausnehmungen 13, 14, 15 zuverlässig daran gehindert wird, in den Ringspalt 6 einzudringen, d.h. eine Situation, wie sie sich aus Figur 1 ergibt, tritt auch bei diesem Stützring 10 nicht ein.

Es versteht sich, dass die gezeigte Ausführungsform analog auch bei einer Dichtungseinrichtung zur Anwendung kommen kann, bei der die Ringnut 7 in das Außenteil 2 eingeformt ist und dort der Dichtring 8 mit Stützring 10 eingesetzt sind. In diesem Fall weist das Innenteil 3 keine Ringnut auf. Der Stützring 10 hat dann Ausnehmungen 13, 14, 15 nicht am Außenumfang 12, sondern am Innenumfang 11.

## Patentansprüche

1. Dichtungseinrichtung (1) mit einem Außenteil (2), das eine Bohrung mit zylindrischer Innenwandung (4) aufweist, und einem in der Bohrung koaxial sitzenden Innenteil (3) mit einer zylindrischen Außenwandung (59, wobei Innenwandung (4) und Außenwandung (5) einen Ringspalt (6) ausbilden und wobei in die Außenwandung (5) eine zur Innenwandung (4) des Außenteils (2) hin offene Ringnut (7) eingeformt ist, in die in Richtung der Koaxialachse nebeneinander ein Dichtring (8) aus elastomerem Material und ein endloser Stützring (10) eingesetzt sind, welcher einen kreisrunden Außenumfang hat, **dadurch gekennzeichnet, dass** der kreisrunde Außenumfang des Stützrings (10) in zumindest einem Abschnitt durch eine in Richtung der Koaxialachse durchgehende Ausnehmung (13, 14, 15) unterbrochen ist.

2. Dichtungseinrichtung mit einem Außenteil, das eine Durchgangsbohrung mit zylindrischer Innenwandung aufweist, und mit einem in der Bohrung koaxial sitzenden Innenteil mit einer zylindrischen Außenwandung, wobei Innenwandung und Außenwandung einen Ringspalt ausbilden und wobei in die Innenwandung eine zur Außenwandung des Innenteils hin offene Ringnut eingeformt ist, in die in Richtung der Koaxialachse nebeneinander ein Dichtring aus elastomerem Material und ein endloser Stützring eingesetzt sind, welche einen kreisrunden Innenumfang hat, **dadurch gekennzeichnet, dass** der kreisrunde Innenumfang des Stützrings in zumindest einem Abschnitt durch eine in Richtung der Koaxialachse durchgehende Ausnehmung unterbrochen ist.

3. Dichtungseinrichtung nach Anspruch 1 oder 2, **dadurch gekennzeichnet, dass** mehrere solcher Ausnehmungen (13, 14, 15) vorzugsweise in gleichen Winkelabständen über den Umfang des Stützrings (10) verteilt vorgesehen sind.

4. Dichtungseinrichtung nach einem der Ansprüche 1 bis 3, **dadurch gekennzeichnet, dass** die Ausnehmung(en) (13, 14, 15) Kreissegmentform hat bzw. haben.

5. Dichtungseinrichtung nach einem der Ansprüche 1 bis 4, **dadurch gekennzeichnet, dass** die maximale Erstreckung (B) der Ausnehmung(en) in Radialrichtung mindestens 0,1 mm, insbesondere 0,15 mm beträgt.

6. Dichtungseinrichtung nach einem der Ansprüche 1 bis 5, **dadurch gekennzeichnet, dass** der Stützring (10) aus einem Fluorkunststoff, insbesondere aus PTFE besteht.

7. Dichtungseinrichtung nach einem der Ansprüche 1 bis 6, **dadurch gekennzeichnet, dass** der Stützring (10) rechteckigen Querschnitt hat, insbesondere einen Querschnitt, dessen radiale Erstreckung größer ist als deren axiale.

8. Dichtungseinrichtung nach einem der Ansprüche 1 bis 7, **dadurch gekennzeichnet, dass** der Dichtring (8) als O-Ring insbesondere aus einem Fluorkunststoff ausgebildet ist.

9. Dichtungseinrichtung nach einem der Ansprüche 1 bis 8, **dadurch gekennzeichnet, dass** der Stützring (10) nicht mit dem benachbarten Dichtring (8) verbunden ist.

10. Stützring (10) für eine Dichtungseinrichtung (1) nach einem der Ansprüche 1 bis 9, wobei der Stützring (10) endlos ausgebildet ist und einen kreisrunden Außenumfang und/oder Innenumfang hat, **dadurch gekennzeichnet, dass** zumindest der Außenumfang oder zumindest der Innenumfang des Stützrings (10) in zumindest einem Abschnitt durch eine quer zur Ebene des Stützrings (10) durchgehende Ausnehmung (13, 14, 15) unterbrochen ist,
insbesondere mehrere solcher Ausnehmungen (13, 14, 15) vorzugsweise in gleichen Winkelabständen verteilt vorgesehen sind und/oder die Ausnehmung(en) (13, 14, 15) Kreissegmentform hat bzw. haben und/oder
die maximale Erstreckung der Ausnehmung(en) mindestens 0,1 mm, besser 0,15 mm beträgt und/oder
der Stützring aus einem Fluorkunststoff, insbesondere PTFE besteht.
